# EUROPÄISCHE PATENTSCHRIFT

(11) **EP 3 292 392 B1**
(45) Veröffentlichungstag und Bekanntmachung des Hinweises auf die Patenterteilung: **05.04.2023**
(21) Anmeldenummer: 16721640.7
(22) Anmeldetag: 02.05.2016
(51) Int. Cl.: G01N 15/14, G01N 21/64

(54) **ZYTOMETRIERVERFAHREN UND ZYTOMETEREINHEIT**
CYTOMETRIC METHOD AND CYTOMETER UNIT
PROCÉDÉ DE CYTOMÉTRIE ET UNITÉ CYTOMÈTRE

(30) Priorität: 02.05.2015 DE 102015005656
(43) Veröffentlichungstag der Anmeldung: 14.03.2018
(73) Patentinhaber: Testo SE & Co. KGaA, 79853 Lenzkirch (DE)
(72) Erfinder: RIEGER, Robert, 79117 Freiburg (DE); VON OLSHAUSEN, Philipp, 79106 Freiburg (DE)
(74) Vertreter: Börjes-Pestalozza, Henrich
(86) Internationale Anmeldenummer: PCT/EP2016/000710
(87) Internationale Veröffentlichungsnummer: WO 2016/177459

(56) Entgegenhaltungen:
- EP-A1- 2 746 748
- DE-A1-102013 017 733
- US-A1- 2013 126 755

## Beschreibung

Die Erfindung betrifft ein Zytometrierverfahren, wobei in einer zytometrischen Messung ein in einem Probenträger ausgebildeter, eine zu untersuchende Probe enthaltender Zytometerkanal in einen optischen Pfad gebracht wird, wobei der optische Pfad einen Einwirkbereich am Probenträger definiert und eine Detektoranordnung einen empfindlichen Bereich am Probenträger definiert.

Die Erfindung betrifft weiter eine Zytometereinheit mit einer Aufnahme für einen einsetzbaren Probenträger, wobei in der Aufnahme eine mit einem eingesetzten Probenträger koppelbare Rotationseinheit angeordnet ist, mit welcher der in die Aufnahme eingesetzte Probenträger rotierbar ist, und wobei in der Aufnahme ein optischer Pfad zur Durchführung einer zytometrischen Messung an einem Zytometerkanal des eingesetzten Probenträgers ausgebildet ist. Bevorzugt ist die Aufnahme zum Einsetzen eines scheibenförmigen Probenträgers ausgebildet, beispielsweise schlitzförmig.

Zytometrieverfahren sind bekannt und werden beispielsweise eingesetzt, um an einer Probe Zähl-Untersuchungen und/oder stoffliche Analysen auszuführen. Hierzu ist es bekannt, Zytometereinheiten zur Ausführung eines Zytometrierverfahrens einzusetzen. Bei den bekannten Zytometrierverfahren ist es wünschenswert, die zu untersuchende Probe in einem Probenträger vorzuhalten, wobei für eine standardisierte und/oder häufige Ausführung des Zytometrierverfahrens der Zytometerkanal am besten auf dem Probenträger selbst ausgebildet ist.

Es hat sich herausgestellt, dass vor Beginn der eigentlichen zytometrischen Messung eine genaue Ausrichtung des Zytometerkanals in Bezug auf den optischen Pfad erforderlich ist. Hierzu sind verschiedene Mittel vorgeschlagen worden, jedoch sind hohe Anforderungen an die Genauigkeit der Ausrichtung einzuhalten. Es könnte daher versucht werden, nach einer Grobausrichtung eine Feinjustage der Ausrichtung dadurch zu erreichen, dass bevorzugt automatisiert eine Ausrichtung gesucht wird, für welche ein Messsignal eine besonders geeignete Charakteristik aufweist. Hierbei hatte sich jedoch herausgestellt, dass der Probenträger selbst auf eine Lichteinwirkung reagieren kann, so dass es schwierig ist, durch eine Veränderung der Ausrichtung des Zytometerkanals relativ zum optischen Pfad eine aussagekräftige Veränderung des Messsignals zu erfassen und auszuwerten.

Der verwendete Probenträger ist bei der Erfindung bevorzugt scheibenförmig ausgebildet. Die Scheibenform kann beispielsweise dadurch charakterisiert werden, dass der Probenträger in einer Richtung - beispielsweise in seiner Dicke - eine wesentlich kleinere Abmessung aufweist als in den zu dieser Richtung komplementären zwei Richtungen (beispielsweise seiner Länge und Breite). Der Probenträger kann hierbei eine beliebige Grundform oder Kontur aufweisen, beispielsweise kreisförmig, dreieckig, viereckig, insbesondere rechteckig, vieleckig oder winkelsegmentförmig ausgebildet sein.

Aus DE 10 2013 017 733 A1 ist ein Zytometer bekannt, bei dem Partikel, die in einem Fluid enthalten sind, beispielsweise Zellen, durch Zentrifugieren am äußeren Rand einer mikrofluidischen Kammer eines Probenträgers aufkonzentriert werden, um sie anschließend mittels einer optischen Einheit untersuchen zu können. Da der Probenträger durch das bei der zytometrischen Untersuchung verwendete Licht zu einer störenden Eigenfluoreszenz angeregt wird, wird vorgeschlagen, zunächst ein Abklingen der Eigenfluoreszenz abzuwarten und erst anschließend die Messung bei stillstehendem Probenträger durchzuführen.

EP 2 746 748 A1 offenbart ein konfokales Multi-Photonen-Mikroskop zur Untersuchung Licht-emittierender Partikel bei dem ein Galvano-Spiegel, der einen Lichtstrahl kontinuierlich umlenkt, verwendet wird, um einen optischen Detektionsbereich mit dem Lichtstrahl abzuwandern.

US 2013 126755 A1 offenbart ein Gerät zur gleichzeitigen Aufnahme mehrerer Parameter einer Fluoreszenz-Lebenszeit-Messung, wobei hierzu eine zu vermessende Probe mit einem gepulsten Laser beleuchtet wird. Mit diesem Verfahren können Vorgänge **innerhalb einzelner Zellen** mit hoher zeitlicher und räumlicher Auflösung untersucht werden.

Von diesem Hintergrund ausgehend, liegt der Erfindung die Aufgabe zugrunde, die beschriebene automatisierte Feinausrichtung zu verbessern.

Zur Lösung dieser Aufgabe sind erfindungsgemäß die Merkmale des Anspruchs 1 vorgesehen. Insbesondere wird somit zur Lösung der genannten Aufgabe bei einem Zytometrierverfahren der eingangs beschriebenen Art vorgeschlagen, dass der Probenträger zumindest in einem Bereich des Zytometerkanals aus einem fluoreszierenden, lichtdurchlässigen Material besteht und dass das fluoreszierende, lichtdurchlässige Material vor der zytometrischen Messung durch Lichteinwirkung gebleicht wird. Von Vorteil ist dabei, dass durch die Bleichung das Material des Probenträgers optisch deaktivierbar ist, so dass im Anschluss eine Feinjustage durch Verschiebung des empfindlichen Bereichs auf dem Probenträger und Auswertung des Ausgangssignals ausführbar ist. Eine Beeinflussung des Ausgangssignals zur Vorbereitung der zytometrischen Messung und zur Feinausrichtung des empfindlichen Bereichs während der Verschiebung des empfindlichen Bereichs in den Probenträger ist somit verminderbar oder sogar ganz vermeidbar, indem die Eigenfluoreszenz des Materials des Probenträgers zumindest vorübergehend durch das Bleichen unterdrückt oder zumindest vermindert wird. Der Bereich kann hierbei den bereits erwähnten Einwirkbereich umfassen.

Zusätzlich kann zur Lösung der genannten Aufgabe bei einem Zytometrierverfahren der eingangs beschriebenen Art vorgesehen sein, dass eine Lage des optischen Pfads an dem Probenträger derart verändert wird, dass vor der zytometrischen Messung ein Ausgangssignal der Detektoranordnung eine verbesserte Signalqualität aufweist. Von Vorteil ist dabei, dass eine automatisierte Feinjustage ermöglicht ist. Besonders günstig ist es hierbei, wenn diese Veränderung der Lage des optischen Pfades nach oder während der bereits beschriebenen erfindungsgemäßen Bleichung durch Lichteinwirkung ausgeführt wird. Somit kann die bereits erwähnte Eigenfluoreszenz des Materials für die Zwecke der Feinjustage unterdrückt werden.

Es kann hierbei vorgesehen sein, dass die Größe des empfindlichen Bereiches durch eine Blende vor der Detektoreinrichtung vorgegeben ist. Allgemein ist es günstig, wenn die Größe des empfindlichen Bereiches so bemessen ist, dass der Zytometerkanal in seinem Querschnitt vollständig abdeckbar ist. Auf diese Weise kann erreicht werden, dass alle Partikel in der zu untersuchenden Probe erfassbar sind. Es hat sich als günstig erwiesen, den empfindlichen Bereich so zu definieren, dass möglichst wenig umgebendes Probenträgermaterial miterfaßt wird. Auf diese Weise kann ein günstiges Signal-Rauschen-Verhältnis erreichbar sein. Hier kann beispielsweise vorgesehen sein, dass der empfindliche Bereich höchstens 10% größer als die Erstreckung des Zytometerkanals im Querschnitt, beispielsweise gleich der Erstreckung des Querschnitts, ist.

Statt der Blende kann auch die Größe des empfindlichen Bereiches durch die Detektorgeometrie selbst oder eine vorgeschaltete Optik gegeben sein.

Zur Bewertung des Ausgangssignals ist es günstig, wenn in dem Zytometerkanal bereits die Probe oder ein anderes auswertbares Medium befindlich ist. Beispielsweise kann hier eine Autofluoreszenz des flüssigen Probenmaterials verwendet werden.

Zur eigentlichen zytometrischen Messung kann anschließend statt diesem Ausgangssignal ein selektives Ausgangssignal ausgewertet werden, welches beispielsweise auf einzelne Partikel ausgerichtet ist. Dies kann auf elektronische Weise eingerichtet sein.

Hierzu wird während der Feinjustage beispielsweise ein einheitlicher Mittelwert einer aufgenommenen Intensität des Ausgangssignals optimiert. In einer nachfolgenden zytometrischen Messung kann anschließend das Ausgangssignal zeitlich so aufgelöst werden, dass zeitliche Maxima oder Extrema erfassbar sind. Auf diese Weise können einzelne Partikel detektiert werden.

Bei einer Ausgestaltung der Erfindung kann vorgesehen sein, dass in einem Teil des Einwirkbereichs ein fluoreszierendes Material des Probenträgers, beispielsweise das bereits erwähnte Material, durch Lichteinwirkung gebleicht wird, in den der empfindliche Bereich durch die Veränderung der Lage des optischen Pfades verbracht werden soll. Von Vorteil ist dabei, dass eine Beeinflussung des erwähnten Ausgangssignals durch Eigenfluoreszenz des Materials bei Veränderung der Lage des optischen Pfades reduzierbar oder unterdrückbar ist.

Bei einer Ausgestaltung der Erfindung kann vorgesehen sein, dass die Lage des optischen Pfades mit einer verstellbaren Spiegelanordnung verändert wird. Somit ist die Lage des optischen Pfades besonders einfach variierbar und feinjustierbar, insbesondere bei ortsfestem Probenträger.

Bei einer Ausgestaltung der Erfindung kann vorgesehen sein, dass die Lage des optischen Pfades mit einer an ein Ausgangssignal, beispielsweise an das bereits erwähnte Ausgangssignal, gekoppelten Rückkopplungsschleife eingestellt wird. Von Vorteil ist dabei, dass eine automatische Feinjustage auf den empfindlichsten Teil des optischen Pfades und/oder den empfindlichsten Bereich des Zytometerkanals ermöglicht ist. Die Rückkopplungsschleife kann beispielsweise zur Verbesserung einer Signalqualität und/oder zur Verbesserung eines Signal-Rausch-Verhältnisses eingerichtet sein.

Bei einer Ausgestaltung der Erfindung kann vorgesehen sein, dass der Einwirkbereich den empfindlichen Bereich überdeckt. Von Vorteil ist dabei, dass in Nachbarschaft zu dem empfindlichen Bereich bereits ein erfindungsgemäßes Bleichen durchführbar ist. Somit kann einfach erreicht werden, dass bei einer Verlagerung des empfindlichen Bereichs durch Veränderung der Relativposition des optischen Pfads relativ zum Zytometerkanal der empfindliche Bereich in vorgebleichtes Material des Probenträgers verbracht wird. Eigenfluoreszenzen des Materials sind bei der Feinjustage im Ausgangssignal somit einfach unterdrückbar.

Bei einer Ausgestaltung der Erfindung kann vorgesehen sein, dass die Lage des optischen Pfads quer zu einer Erstreckungsrichtung des Zytometerkanals verändert wird. Somit ist ein Querschnitt des Zytometerkanals optimal erfassbar.

Bei einer Ausgestaltung der Erfindung kann vorgesehen sein, dass der Einwirkbereich mit einem Lichtvorhang beleuchtet wird, dessen Querschnitt längs einer Erstreckungsrichtung des Zytometerkanals eine erste Ausdehnung und quer zu der Erstreckungsrichtung des Zytometerkanals eine zweite Ausdehnung hat, wobei die erste Ausdehnung kleiner als die zweite Ausdehnung ist. Hierbei sind die erste Ausdehnung und die zweite Ausdehnung jeweils quer oder senkrecht zu der Strahlrichtung des Lichtvorhangs ausgerichtet. Von Vorteil ist dabei, dass eine Lichtmenge besonders wirkungsvoll ausnutzbar ist zur Fokussierung auf den Zytometerkanal einerseits und zum Bleichen von benachbarten Bereichen des Zytometerkanals andererseits. Die Verwendung des Lichtvorhangs ist besonders günstig, wenn die Lage des optischen Pfads quer zu der Erstreckungsrichtung des Zytometerkanals verändert wird. Auf diese Weise ist einfach erreichbar, dass eine Verlagerung des optischen Pfads und somit eine Verlagerung des empfindlichen Bereichs im Probenträger in Teile des Materials des Probenträgers führt, die bereits vorgebleicht sind.

Besonders günstig ist es dabei, wenn die erste Ausdehnung auf eine Größe eines, beispielsweise des bereits erwähnten, empfindlichen Bereichs abstimmt ist. Somit ist eine günstige Fokussierung des optischen Pfads längs der Erstreckungsrichtung des Zytometerkanals erreichbar. Alternativ oder zusätzlich kann vorgesehen sein, dass die zweite Ausdehnung auf eine Größe eines, beispielsweise des bereits erwähnten, Einwirkbereichs abgestimmt ist. Von Vorteil ist dabei, dass ein Bleichen in einem großen Bereich, beispielsweise im Einwirkbereich, ausführbar ist.

Zur Lösung der genannten Aufgabe sind erfindungsgemäß alternativ oder zusätzlich die Merkmale des auf eine Zytometereinheit gerichteten unabhängigen Anspruchs 7 vorgesehen. Insbesondere wird somit bei einer Zytometereinheit der eingangs beschriebenen Art erfindungsgemäß vorgeschlagen, dass ein Mittel zum Bleichen des Probenträgers zumindest in einem Bereich um den Zytometerkanal durch Lichteinwirkung ausgebildet ist. Von Vorteil ist dabei, dass Eigenfluoreszenzen des Probenträgers, die bei einer automatischen Feinjustage anhand eines Ausgangssignals störend wirken würden, unterdrückbar oder zumindest reduzierbar sind. Somit muss bei der Erfindung nicht zugewartet werden, bis die Eigenfluoreszenzen bei der Feinjustage von selbst abgeklungen sind. Eine Wartezeit zwischen einzelnen Justageschritten bei der Feinjustage sind somit verzichtbar. Der Bereich des Zytometerkanals kann beispielsweise durch den Einwirkbereich und/oder durch einen Verstellbereich abdeckbar oder beschrieben sein.

Bei einer Ausgestaltung der Erfindung kann vorgesehen sein, dass das Mittel zum Bleichen zumindest eine strahlformende Linsenanordnung aufweist. Von Vorteil ist dabei, dass ein großer Bereich bleichbar ist. Die Strahlformung kann zur Ausbildung eines unrunden Querschnitts des optischen Pfads eingerichtet sein, beispielsweise durch Bildung eines Lichtvorhangs. Von Vorteil ist dabei, dass in einer Dimension des Querschnitts eine Fokussierung und in einer zweiten Dimension des Querschnittes eine breite Ausleuchtung zum Bleichen erreichbar ist. Bevorzugt ist die zweite Dimension quer zu einer, beispielsweise der erwähnten, Erstreckungsrichtung des Zytometerkanals ausgerichtet.

Alternativ oder zusätzlich kann vorgesehen sein, dass das Mittel zum Bleichen zumindest eine verstellbare Spiegelanordung aufweist. Von Vorteil ist dabei, dass ein Einwirkbereich an dem Probenträger verschiebbar ist, um den Probenträger in einem möglichst großen Bereich zu bleichen.

Bei einer Ausgestaltung der Erfindung kann vorgesehen sein, dass eine Verstellbarkeit eines durch eine Detektoranordnung definierten empfindlichen Bereichs durch den Bereich um den Zytometerkanal begrenzt ist. Von Vorteil ist dabei, dass eine Verstellung des empfindlichen Bereichs, beispielsweise bei einer Feinjustage, nicht aus dem gebleichten Bereich herausführt. Somit sind störende Einflüsse von ungebleichtem Material des Probenträgers reduzierbar oder sogar ganz vermeidbar. Die Feinjustage ist somit schneller und insbesondere ohne lange Wartezeiten bis zum Abklingen einer Eigenfluoreszenz ausführbar.

Zur Lösung der Aufgabe kann zudem bei der Zytometereinheit vorgesehen sein, dass ein Veränderungsmittel zur Veränderung einer Lage des optischen Pfads an dem eingesetzten Probenträger ausgebildet ist. Von Vorteil ist dabei, dass eine Feinjustierung des optischen Pfads in Bezug auf den Probenträger und insbesondere auf den Zytometerkanal ausführbar ist. Besonders günstig ist es, wenn das Veränderungsmittel zur Veränderung der Lage des optischen Pfads bei feststehendem Probenträger und somit ortsfestem Zytometerkanal ausgebildet ist. Somit ist der Probenträger nach einer Grobjustierung fixierbar, um in einer Feinjustierung einen günstigsten Auftragspunkt des optischen Pfades auf den Probenträger zu ermitteln.

Bei einer Ausgestaltung der Erfindung kann vorgesehen sein, dass das Veränderungsmittel eine verstellbare Spiegelanordnung hat. Somit ist ein einfaches Mittel bereitgestellt, die Lage des optischen Pfads bei feststehenden oder ortsfestem Probenträger zu justieren und/oder einzustellen.

Bei einer Ausgestaltung der Erfindung kann vorgesehen sein, dass die Veränderungsmittel zum Verstellen einer Lage des empfindlichen Bereichs und/oder des Einwirkbereichs am eingesetzten Probenträger quer zu einer Erstreckungsausrichtung des Zytometerkanals eingerichtet sind. Somit ist eine Abstimmung des Einwirkbereichs und insbesondere des empfindlichen Bereichs auf einen Querschnitt des Zytometerkanals ausführbar.

Bei einer Ausgestaltung der Erfindung kann vorgesehen sein, dass eine Rückkopplungsschleife, die an ein Ausgangssignal einer die zytometrische Messung ausführenden Elektroeinheit gekoppelt ist, zur Ansteuerung des Veränderungsmittels eingerichtet ist. Von Vorteil ist dabei, dass eine automatische Einjustierung anhand des Ausgangssignals durchführbar ist. Hierzu kann beispielsweise vorgesehen sein, dass zur Auswertung des Ausgangssignals versuchsweise die zytometrische Messung durchgeführt wird, wobei die Veränderungsmittel so angesteuert werden, dass ein Ausgangssignal der Detektoreinheit beispielsweise ein besonders günstiges Signal-Rausch-Verhältnis aufweist. Besonders günstig ist es hierbei, wenn das Veränderungsmittel einen verstellbaren Spiegel, beispielsweise den bereits erwähnten verstellbaren Spiegel, aufweist.

Allgemein kann hierbei vorgesehen sein, dass der Einwirkbereich größer als der empfindliche Bereich ist. Von Vorteil ist dabei, dass der empfindliche Bereich von dem Einwirkbereich aufgenommen ist. Somit ist erreichbar, dass benachbart zu dem empfindlichen Bereich ein erfindungsgemäßes Bleichen des Materials des Probenträgers ausführbar ist.

Bei einer vorteilhaften Ausgestaltung kann vorgesehen sein, dass Mittel zur Beleuchtung des Einwirkbereichs mit einem Lichtvorhang ausgebildet sind, wobei der Lichtvorhang einen Querschnitt mit einer ersten Ausdehnung längs einer Erstreckungsrichtung des Zytometerkanals und einer zweiten Ausdehnung quer zu der Erstreckungsrichtung des Zytometerkanals hat, wobei die erste Ausdehnung kleiner als die zweite Ausdehnung ist. Somit kann ein erfindungsgemäßes Bleichen in benachbarten Bereichen längs der Verstellbewegung des empfindlichen Bereichs auf dem Probenträger ausgeführt werden. Besonders günstig ist es dabei, wenn die erste Ausdehnung auf eine Größe des empfindlichen Bereichs abgestimmt ist. Somit ist eine Fokussierung des Lichtstrahls längs der Erstreckungsrichtung leicht erreichbar. Alternativ oder zusätzlich kann vorgesehen sein, dass die zweite Ausdehnung auf einer Größe des Einwirkbereichs abgestimmt ist. Somit sind eine möglichst große Fläche und insbesondere eine möglichst große Wegstrecke einer Verstellbewegung bei der Feinjustage auf dem Material zum erfindungsgemäßen Bleichen abdeckbar.

Die Mittel zur Beleuchtung können hierbei zur Erzeugung des Lichtvorhangs eine Kombination einer zylindrischen Linse mit einer sphärischen Linse aufweisen, um eine Strahlaufweitung in der zweiten Ausdehnung und eine Fokussierung in der ersten Ausdehnung zu erreichen.

Die Erfindung wird nun anhand von Ausführungsbeispielen näher beschrieben, ist jedoch nicht auf diese Ausführungsbeispiele beschränkt. Weitere Ausführungsbeispiele ergeben sich durch Kombination der Merkmale einzelner oder mehrerer Ansprüche untereinander und/oder mit einzelnen oder mehreren Merkmalen der Ausführungsbeispiele.

Es zeigt in teilweise stark schematisierter Darstellung
- Fig. 1: eine erfindungsgemäße Zytometereinheit zur Erläuterung eines erfindungsgemäßen Zytometrieverfahrens,
- Fig. 2: unterschiedliche Quer- und Längsschnitte durch einen optischen Pfad und einen Probenträger bei einem erfindungsgemäßen Zytometrieverfahren und
- Fig. 3: eine Linsenanordnung zur Erzeugung eines optischen Pfades bei einer erfindungsgemäßen Zytometereinheit und einem erfindungsgemäßen Zytometrieverfahren.

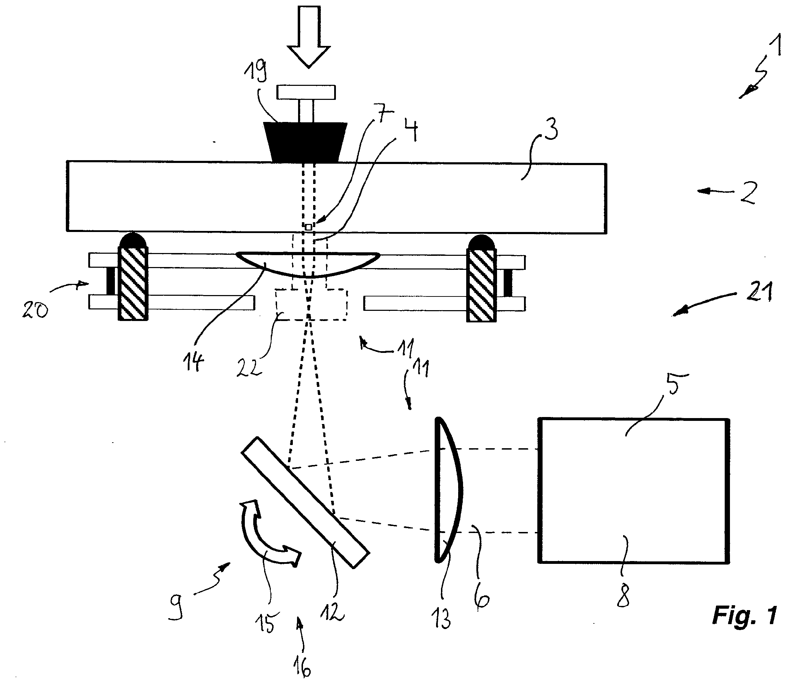

Fig. 1 zeigt zur Erläuterung der Erfindung stark vereinfachter Darstellung eine im Ganzen mit 1 bezeichnete Zytometereinheit. Die Zytometereinheit hat eine Aufnahme 2, in die ein hier beispielhaft scheibenförmiger Probenträger 3 einsetzbar ist. Der Probenträger 3 kann hierbei als viereckige, insbesondere rechteckige, als kreisförmige, als dreieckige, als vieleckige oder als winkelsegmentförmige (tortenstückförmige) Scheibe oder als eine Scheibe mit einer anderen Grundform oder Kontur ausgebildet sein.

Die Zytometereinheit 1 hat weiter eine Rotationseinheit 22, die zur Vereinfachung der Darstellung nur schematisch abgebildet ist. Die Rotationseinheit 22 ist in an sich bekannter Weise mit dem eingesetzten Probenträger 3 koppelbar, um diesen um eine Drehachse in der Aufnahme 2 rotieren. Beispielsweise kann auf diese Weise eine Zentrifugierung durchgeführt werden.

In der Aufnahme 2 ist ein optischer Pfad 4 ausgebildet. Ein Laserlicht-Generator 5 erzeugt Laserlicht 6, welches in noch genauer zu beschreibender Weise in den optischen Pfad 4 geführt ist und einen Zytometerkanal 7 in dem eingesetzten Probenträger 3 beleuchtet. Hierdurch wird in an sich bekannter Weise eine Probe in dem Zytometerkanal 7 optisch angeregt. Die angeregte Probe gibt selbst Licht ab, welches in einer Detekoreinheit 8 während einer zytometrischen Messung erfasst und aufgezeichnet wird.

Der Zytometerkanal 7 ist in einem Material des Probenträgers 3 ausgebildet, welches bei Lichtbestrahlung zu einer Eigenfluoreszenz neigt, die im Laufe der Zeit abklingt.

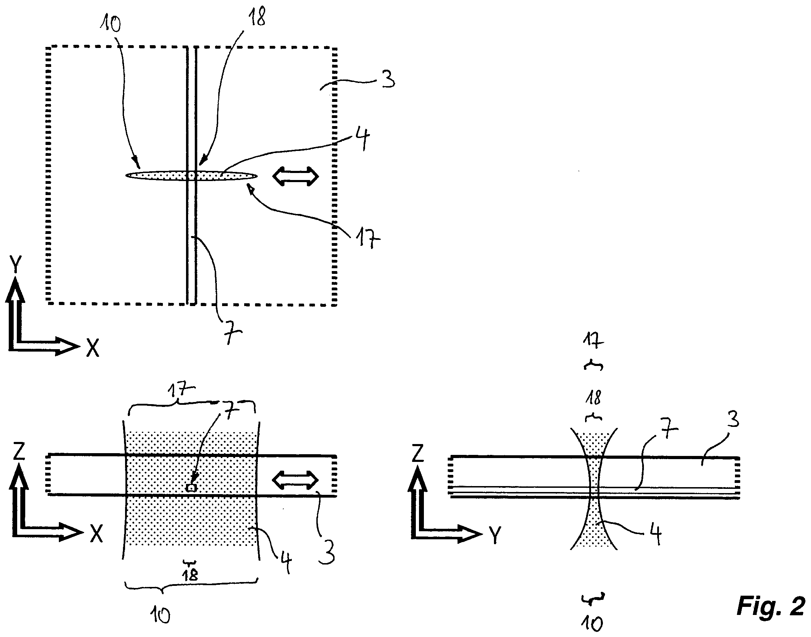

Um diese Eigenfluoreszenz schneller abklingen zu lassen oder gar nicht erst entstehen zu lassen, wird der Probenträger 3 mit einem Mittel 9 zum Bleichen in einem Bereich 10 um den Zytometerkanal 7 (vgl. Fig. 2) durch Lichteinwirkung mit dem Laserlicht 6 gebleicht.

Das Mittel zum Bleichen 9 hat hierbei eine Linsenanordnung 11 und eine verstellbare Spiegelanordnung 12.

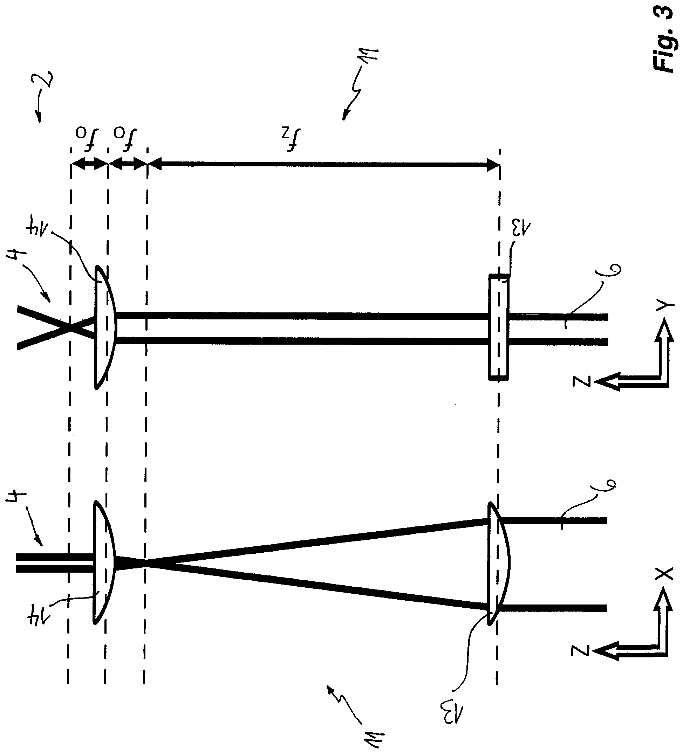

Die Linsenanordnung 11 weitet hierbei den Lichtstrahl 6 in einer Richtung quer zum optischen Pfad 4 auf. Dies wird anhand der Fig. 3 erläutert. Fig. 3 zeigt in der linken Hälfte eine Schnittdarstellung durch die Linsenanordnung 11 und die Strahlführung und in der rechten Hälfte einen um 90 Grad gedrehte Schnittanordnung.

Es ist ersichtlich, dass die Linsenanordnung 11 an einer Eingangsseite eine zylindrische Linse 13 und an einem Ausgang eine rotationssymmetrische Objektivlinse 14, hier beispielhaft eine asphärische Linse, aufweist.

In der Richtung quer zum Verlauf des Lichtstrahls 6 - hier die Y-Richtung -, in welcher die zylindrische Linse 13 keine Krümmung aufweist, wird der Lichtstrahl 6 durch die Objektivlinse 14 fokussiert. In dem Brennpunkt, in dem der einfallende Parallelstrahl fokussiert ist, befindet sich der Zytometerkanal 7 des eingesetzten Probenträgers 3.

In der Richtung quer zur Strahlrichtung des Laserlichts 6 - hier die X-Achse -, in welcher die zylindrische Linse 13 eine Krümmung aufweist, wird das einfallende Laserlicht 6 zunächst kollimiert oder parallelisiert und durch die Objektivlinse 14 wieder aufgeweitet.

Die Ausdehnung des optischen Pfades 4, welcher durch das aus der Linsenanordnung 11 austretende Laserlicht gegeben ist, weist daher (in der Ebene des Zytometerkanals 7 oder an der Stelle des Probenträgers 3) in X-Richtung eine vielfach größere Abmessung auf, als in Y-Richtung. Die X-Richtung liegt hierbei quer zur Erstreckungsrichtung des Zytometerkanals 7.

Dies ist in Fig. 2 dargestellt. Hierbei zeigt Fig. 2 rechts unten einen Querschnitt durch den optischen Pfad 4 und den Probenträger 3 in der Y-Z-Ebene, in der linken unteren Abbildung einen Querschnitt durch den optischen Pfad 4 und den Probenträger 3 in der X-Z-Ebene und schließlich in der linken oberen Abbildung einen Querschnitt durch den Probenträger 3 und den optischen Pfad 4 in der X-Y-Ebene, also in der Ebene, die durch die Scheibenform des Probenträgers 3 gekennzeichnet ist.

In Fig. 2 ist somit erkennbar, dass durch die Linsenanordnung 11 ein optischer Pfad 4 mit einem unrunden Querschnitt ausgebildet ist. Hierbei kann die Ausdehnung des Querschnitts in Y-Richtung beispielsweise 1 bis 3 Mikrometer betragen, während die Ausdehnung des Querschnitts in X-Richtung einige 100 Mikrometer betragen kann.

Durch diese gegenüber der Fokussierung aufgeweitete Strahlform ist ein Lichtvorhang gebildet, welcher in X-Richtung einen großen Bereich 10 um den Zytometerkanal 7 abdeckt. In dem Bereich 10 wird der Probenträger 3 gebleicht.

Die Linsenanordnung 11 und der Laserlicht-Generator 5 bilden somit ein Mittel zur Beleuchtung 21 des Probenträgers mit einem Lichtvorhang. Durch ein Schwenken 15 oder Kippen der verstellbaren Spiegelanordnung 12 ist der Lichtstrahl 6 in unterschiedliche Teile des Probenträgers 3 lenkbar, so dass ein größerer Bereich 10 mit dem Lichtstrahl 6 bleichbar ist.

Die verstellbare Spiegelanordnung 12 ist somit Teil eines Veränderungsmittels 16, mit dem die Lage des optischen Pfades 4 an dem eingesetzten Probenträger 3 veränderbar ist.

Das Veränderungsmittel 16 erlaubt es somit, die Lage des optischen Pfades 4 genau auf die tatsächliche Lage des Zytometerkanals 7 abzustimmen.

Durch die Ausdehnung des Lichtstrahls 6 in dem optischen Pfad 4 an dem Probenträger 3 ist ein Einwirkbereich 17 vorgegeben, in welchem der Probenträger 3 mit dem Laserlicht 6 bestrahlt oder beleuchtet wird.

Durch die Detektoranordnung 8 und die Linsenanordnung 11 ist als Teil dieses Einwirkbereichs 17 ein empfindlicher Bereich 18 definiert, von welchem das von der angeregten Probe im Zytometerkanal 7 erzeugte oder abgestrahlte Licht in der Detektoranordnung 8 - gemeinsam mit anderem Licht aus dem epmpfindlichen Bereich 18 wie beispielsweise Licht aus einer Eigenfluoreszenz des Probenträgers 3 - registriert wird.

Zur Feinjustage ist es erforderlich, den empfindlichen Bereich 18 auf die tatsächliche Lage des Zytometerkanals 7 abzustimmen oder auszurichten. Hierzu kann die Spiegelanordnung 12 derart verschwenkt werden, dass der empfindliche Bereich 18 quer zu einer Erstreckungsrichtung des Zytometerkanals 7, also entlang der X-Achse in Fig. 2, verschiebbar ist.

An die Detektoranordnung 8 ist eine nicht weiter dargestellte, an sich bekannte Rückkopplungsschleife angeschlossen, die ein Ausgangssignal der Detektoranordnung 8 auswertet und das Veränderungsmittel 16 so ansteuert, dass das Ausgangssignal eine verbesserte Intensität und/oder ein verbessertes Signal-Rausch-Verhältnis aufweist. Hierbei wird es vorkommen, dass der empfindliche Bereich 18 von dem Zytometerkanal 7 weg in das Material des Probenträgers 3 verschoben wird.

Da aber der optische Pfad 4 in dieser Verstellrichtung (X-Achse) eine vergleichsweise große Abmessung im Querschnitt aufweist, führt diese Verstellbewegung nicht aus dem bereits gebleichten Bereich 10 heraus. Eine Störung des Ausgangssignals durch eine Eigenfluoreszenz des Materials des Probenträgers 3 wird so vermieden.

In Fig. 2 ist ersichtlich, dass der empfindliche Bereich 18 komplett in den Einwirkbereich 17 enthalten ist. Der bereits erwähnte Lichtvorhang ist so ausgebildet, dass die erste Ausdehnung längs der X-Achse größer als die zweite Ausdehnung längs der Y-Achse ist, wobei die Größe des Querschnitts entlang der ersten Ausdehnung auf die Größe des empfindlichen Bereichs 18 und die Größe der zweiten Ausdehnung des Querschnitts auf die Größe des Einwirkbereichs 17 abgestimmt ist. So ist erreicht, dass längs des Zytometerkanals 7 nur ein vergleichsweise kurzer Abschnitt, der durch die Ausdehnung des empfindlichen Bereichs 18 gegeben ist, angeregt und ausgemessen wird.

Wie bereits erwähnt, wird die Lage des optischen Pfads 4 an am Probenträger 3 mit den Veränderungsmitteln 16 feinjustiert. Hierbei wird der Probenträger 3 mit einer Niederhalter 19 gegen eine Auflage 20 gedrückt und fixiert. Bei dem erfindungsgemäßen Zytometrierverfahren wird somit der Probenträger 3 mit einer Probe, die in dem Zytometerkanal 7 enthalten ist, in den optischen Pfad 4 gebracht. Dieser optische Pfad 4 definiert den Einwirkbereich 17 für das Laserlicht 6 am Probenträger 3. Das Laserlicht 6 regt die Probe an, wodurch die Probe selbst Licht abstrahlt. Dieses Licht wird in der Detektoranordnung 8 gesammelt, wobei die Ausgestaltung der Detektoranordnung 8 einen empfindlichen Bereich 18 am Probenträger auszeichnet, von dem das Licht gemessen wird. Während dieser zytometrischen Messung wird das fluoreszierende, lichtdurchlässige Material des Probenträgers 3 in dem Bereich 10 um den Zytometerkanal 7 herum durch Lichteinwirkung gebleicht.

Währenddessen wird in einer Rückkopplungsschleife die Lage des optischen Pfads 4 auf die Lage des Zytometerkanals 7 derart abgestimmt, dass das Ausgangssignal der Detektoranordnung 8 eine verbesserte Signalqualität aufweist. Die Verstellung des optischen Pfads 4 erfolgt hierbei in einer Richtung quer zur Erstreckungsrichtung des Zytometerkanals 4, in welcher der Querschnitt des optischen Pfads 4 seine größte Ausdehnung hat. Hierbei ragt der Einwirkungsbereich 17 über den empfindlichen Bereich 18 derart hinaus, dass das fluoreszierende Material des Probenträgers 3 in demjenigen Teil des Einwirkungsbereichs 17 durch Lichteinwirkung gebleicht wird, in das der empfindliche Bereich 18 durch Lagerveränderung des optischen Pfades 4 verbracht werden soll.

Zur Erfindung gehört auch eine Verwendung eines vorzugsweise scheibenförmigen Probenträgers 3, insbesondere wie zuvor beschrieben, bei einer erfindungsgemäßen Zytometereinheit 1, insbesondere wie zuvor beschrieben. Hierbei kann vorgesehen sein, dass die Verwendung eine Ausführung des erfindungsgemäßen Zytometrierverfahrens ermöglicht.

Bei der Zytometereinheit 1 mit einer Aufnahme 2, die zum Einsetzen eines vorzugsweise scheibenförmigen, auswechselbaren Probenträgers 3 eingerichtet ist und in der ein optischer Pfad 4 zur Durchführung einer zytometrischen Messung ausgebildet ist, wird vorgeschlagen, den Probenträger 3 in einem Bereich 10 um einen durch eine Detektoranordnung 8 vorgegebenen empfindlichen Bereich 18 zu bleichen und/oder eine Lage des optischen Pfads 4 an dem eingesetzten Probenträger 3 mit einem Veränderungsmittel 16 zu verändern.

### Bezugszeichenliste

- 1: Zytometereinheit
- 2: Aufnahme
- 3: Probenträger
- 4: optischer Pfad
- 5: Laserlicht-Generator
- 6: Laserlicht
- 7: Zytometerkanal
- 8: Detektoranordnung
- 9: Mittel zum Bleichen
- 10: (gebleichter) Bereich
- 11: Linsenanordnung
- 12: Spiegelanordnung
- 13: zylindrische Linse
- 14: Objektivlinse
- 15: Verschwenken
- 16: Veränderungsmittel
- 17: Einwirkbereich
- 18: empfindlicher Bereich
- 19: Niederhalter
- 20: Auflage
- 21: Mittel zum Beleuchten
- 22: Rotationseinheit

## Patentansprüche

1. **Zytometrierverfahren,** wobei in einer zytometrischen Messung ein in einem Probenträger (3) ausgebildeter, eine zu untersuchende Probe enthaltender Zytometerkanal (7) in einen optischen Pfad (4) gebracht wird, wobei der optische Pfad (4) einen Einwirkbereich (17) am Probenträger (3) definiert und eine Detektoranordnung (8) einen empfindlichen Bereich (18) am Probenträger (3) definiert, **dadurch gekennzeichnet,**
- **dass** der Probenträger (3) zumindest im Bereich des Zytometerkanals (7) aus einem fluoreszierenden, lichtdurchlässigen Material besteht und
- **dass** das fluoreszierende, lichtdurchlässige Material vor der zytometrischen Messung durch Lichteinwirkung gebleicht wird, wodurch das Material optisch deaktiviert wird,
- wobei im Anschluss eine Feinjustage durch Verschiebung des empfindlichen Bereichs auf dem Probenträger (3) und Auswertung eines Ausgangssignals der Detektoranordnung (8) ausgeführt wird.

2. Zytometrierverfahren nach Anspruch 1,
wobei eine Lage des optischen Pfads (4) an dem Probenträger (3) derart verändert wird, dass vor der zytometrischen Messung ein Ausgangssignal der Detektoranordnung (8) eine verbesserte Signalqualität aufweist.

3. Zytometrierverfahren nach Anspruch 1 oder 2,
wobei in einem Teil des Einwirkbereichs (17) das oder ein fluoreszierendes Material des Probenträgers (3) durch Lichteinwirkung gebleicht wird, in das der empfindliche Bereich (18) durch die Veränderung der Lage des optischen Pfades (4) verbracht werden soll.

4. Zytometrierverfahren nach Anspruch 2 oder 3,
wobei die Lage des optischen Pfads (4) mit einer verstellbaren Spiegelanordnung (12) verändert wird und/oder dass die Lage des optischen Pfads (4) mit einer an das Ausgangssignal gekoppelten Rückkopplungsschleife eingestellt wird.

5. Zytometrierverfahren nach einem der Ansprüche 1 bis 4, wobei der Einwirkbereich (17) den empfindlichen Bereich (18) überdeckt und/oder dass die Lage des optischen Pfads (4) quer zu einer Erstreckungsrichtung des Zytometerkanals (7) verändert wird.

6. Zytometrierverfahren nach einem der Ansprüche 1 bis 5, wobei der Einwirkbereich (17) mit einem Lichtvorhang beleuchtet wird, dessen Querschnitt längs einer Erstreckungsrichtung des Zytometerkanals (7) eine erste Ausdehnung und quer zu der oder einer Erstreckungsrichtung des Zytometerkanals (7) eine zweite Ausdehnung hat, wobei die erste Ausdehnung kleiner als die zweite Ausdehnung ist, insbesondere wobei die erste Ausdehnung auf eine Größe des empfindlichen Bereichs (18) und/oder die zweite Ausdehnung auf eine Größe des Einwirkbereichs (17) abgestimmt ist.

7. **Zytometereinheit (1),** mit einer Aufnahme für einen einsetzbaren, vorzugsweise scheibenförmigen Probenträger (3), wobei in der Aufnahme (2) eine mit einem eingesetzten Probenträger (3) koppelbare Rotationseinheit (22) angeordnet ist, mit welcher der in die Aufnahme (2) eingesetzte Probenträger (3) rotierbar ist, und wobei in der Aufnahme (2) ein optischer Pfad (4) zur Durchführung einer zytometrischen Messung an einem Zytometerkanal (7) des eingesetzten Probenträgers (3) ausgebildet ist, **dadurch gekennzeichnet,**
- **dass** ein Mittel zum Bleichen (9) des Probenträgers (3) zumindest in einem Bereich (10) um den Zytometerkanal durch Lichteinwirkung ausgebildet ist,
- wobei zur Feinjustage eine Verstellbarkeit eines durch eine Detektoranordnung (8) definierten empfindlichen Bereichs (18) durch den Bereich (10) um den Zytometerkanal (7) begrenzt ist.

8. Zytometereinheit (1) nach Anspruch 7,
wobei das Mittel zum Bleichen (9) zumindest eine strahlformende Linsenanordnung (11) und/oder eine verstellbare Spiegelanordnung (12) aufweist.

9. Zytometereinheit (1) nach Anspruch 7 oder 8,
wobei ein Veränderungsmittel (16) zur Veränderung einer Lage des optischen Pfads (4) an dem eingesetzten Probenträger (3) ausgebildet ist,
- sodass eine Feinjustierung des optischen Pfads (4) in Bezug auf den Probenträger (3) und insbesondere auf den Zytometerkanal (7) ausführbar ist.

10. Zytometereinheit (1) nach Anspruch 9,
wobei das Veränderungsmittel (16) eine verstellbare Spiegelanordnung (12) hat und/oder dass die Veränderungsmittel (16) zum Verstellen einer Lage eines empfindlichen Bereichs (18) und/oder eines Einwirkbereichs (17) am eingesetzten Probenträger (3) quer zu einer Erstreckungsrichtung des Zytometerkanals (7) eingerichtet sind.

11. Zytometereinheit (1) nach einem der Ansprüche 7 bis 10, wobei eine Rückkopplungsschleife, die an ein Ausgangssignal einer die zytometrische Messung ausführenden Detektoranordnung (8) gekoppelt ist, zur Ansteuerung des Veränderungsmittels (16) eingerichtet ist.

12. Zytometereinheit (1) nach einem der Ansprüche 7 bis 11, wobei der Einwirkbereich (17) größer als der empfindliche Bereich (18) ausgebildet ist.

13. Zytometereinheit (1) nach einem der Ansprüche 7 bis 12, wobei Mittel zur Beleuchtung (21) des Einwirkbereichs (17) mit einem Lichtvorhang ausgebildet sind, wobei der Lichtvorhang einen Querschnitt mit einer ersten Ausdehnung längs einer Erstreckungsrichtung des Zytometerkanals und einer zweiten Ausdehnung quer zu der Erstreckungsrichtung des Zytometerkanals (7) hat, wobei die erste Ausdehnung kleiner als die zweite Ausdehnung ist, insbesondere wobei die erste Ausdehnung auf eine Größe des empfindlichen Bereichs (18) und/oder die zweite Ausdehnung auf eine Größe des Einwirkbereichs (17) abgestimmt ist.

## Claims

1. Cytometry method, with in a cytometric measurement a cytometry channel (7) embodied in a sample carrier (3) and containing a sample to be examined being introduced into an optical path (4), the optical path (4) defining a region (17) of action on the sample carrier (3) and a detector arrangement (8) defining a sensitive region (18) on the sample carrier (3), **characterized**
- **in that** the sample carrier (3) consists of a fluorescent, light-transmissive material at least in the region of the cytometry channel (7) and
- **in that** the fluorescent, light-transmissive material is bleached by the action of light before the cytometric measurement, as a result of which the material is optically deactivated,
- with a fine adjustment subsequently being carried out by a displacement of the sensitive region on the sample carrier (3) and an evaluation of an output signal of the detector arrangement (8).

2. Cytometry method according to Claim 1,
wherein a position of the optical path (4) on the sample carrier (3) is altered in such a way that prior to the cytometric measurement an output signal of the detector arrangement (8) has an improved signal quality.

3. Cytometry method according to Claim 1 or 2,
wherein the fluorescent material or a fluorescent material of the sample carrier (3) is bleached by action of light in a portion of the region (17) of action into which the sensitive region (18) is intended to be brought by the alteration of the position of the optical path (4) .

4. Cytometry method according to Claim 2 or 3,
wherein the position of the optical path (4) is altered by means of an adjustable mirror arrangement (12) and/or wherein the position of the optical path (4) is set by means of a feedback loop coupled to the output signal.

5. Cytometry method according to any one of Claims 1 to 4,
wherein the region (17) of action covers the sensitive region (18) and/or wherein the position of the optical path (4) is altered transversely to an extension direction of the cytometry channel (7).

6. Cytometry method according to any one of Claims 1 to 5,
wherein the region (17) of action is illuminated with a light curtain whose cross section has a first extent along an extension direction of the cytometry channel (7) and a second extent transversely with respect to the extension direction or an extension direction of the cytometry channel (7), with the first extent being smaller than the second extent, in particular with the first extent being coordinated with a size of the sensitive region (18) and/or the second extent being coordinated with a size of the region (17) of action.

7. Cytometry unit (1), comprising a receptacle for an insertable, preferably sheet-shaped sample carrier (3), with a rotation unit (22) that is couplable to an inserted sample carrier (3) being arranged in the receptacle (2), by means of which rotation unit the sample carrier (3) inserted into the receptacle (2) is rotatable, and with an optical path (4) for carrying out a cytometric measurement on a cytometry channel (7) of the inserted sample carrier (3) being formed in the receptacle (2), **characterized**
- **in that** there is formed a means for bleaching (9) the sample carrier (3) at least in a region (10) around the cytometry channel by action of light,
- with for the fine adjustment an adjustability of a sensitive region (18) defined by a detector arrangement (8) being delimited by the region (10) around the cytometry channel (7).

8. Cytometer unit (1) according to Claim 7,
wherein the means for bleaching (9) comprises at least one beam-shaping lens arrangement (11) and/or an adjustable mirror arrangement (12).

9. Cytometer unit (1) according to Claim 7 or 8,
wherein there is formed an alteration means (16) for altering a position of the optical path (4) on the inserted sample carrier (3),
- with the result that a fine adjustment of the optical path (4) is implementable in relation to the sample carrier (3) and in particular in relation to the cytometer channel (7).

10. Cytometer unit (1) according to Claim 9,
wherein the alteration means (16) has an adjustable mirror arrangement (12) and/or wherein the alteration means (16) are configured for adjusting a position of a sensitive region (18) and/or of a region (17) of action on the inserted sample carrier (3) transversely with respect to an extension direction of the cytometer channel (7).

11. Cytometer unit (1) according to any one of Claims 7 to 10,
wherein a feedback loop coupled to an output signal of a detector arrangement (8) that carries out the cytometric measurement is configured for controlling the alteration means (16).

12. Cytometer unit (1) according to any one of Claims 7 to 11,
wherein the region (17) of action is formed to be larger than the sensitive region (18).

13. Cytometer unit (1) according to any one of Claims 7 to 12,
wherein there are formed means for illuminating (21) the region (17) of action with a light curtain, with the light curtain having a cross section with a first extent along an extension direction of the cytometer channel and a second extent transversely with respect to the extension direction of the cytometer channel (7), with the first extent being smaller than the second extent, in particular with the first extent being coordinated with a size of the sensitive region (18) and/or the second extent being coordinated with a size of the region (17) of action.

## Revendications

1. Procédé de cytométrie selon lequel, dans une mesure cytométrique, un canal de cytomètre (7) agencé dans un porte-échantillon (3) et contenant un échantillon à examiner, est placé sur un trajet optique (4), lequel trajet optique (4) définit une zone d'action (17) sur le porte-échantillon(3) et un dispositif de détection (8) définissant une zone sensible (18) sur le porte-échantillon (3), **caractérisé en ce que**
- le porte-échantillon (3) est constitué d'un matériau fluorescent transparent au moins dans la zone du canal de cytomètre (7) et que
- le matériau fluorescent transparent est blanchi sous l'effet de la lumière avant la mesure cytométrique, de sorte que le matériau est désactivé optiquement,
- après quoi un réglage fin est effectué en déplaçant la zone sensible sur le porte-échantillon (3), ainsi qu'une évaluation d'un signal de sortie du dispositif de détection (8).

2. Procédé de cytométrie selon la revendication 1,
selon lequel une position du trajet optique (4) sur le porte-échantillon (3) est modifiée de sorte qu'un signal de sortie du dispositif de détection (8) présente une meilleure qualité de signal avant la mesure cytométrique.

3. Procédé de cytométrie selon la revendication 1 ou 2,
selon lequel le ou un matériau fluorescent du porte-échantillon (3) est blanchi sous l'action de la lumière dans une partie de la zone d'action (17) dans laquelle la zone sensible (18) doit être placée par la modification de la position du trajet optique (4).

4. Procédé de cytométrie selon la revendication 2 ou 3,
selon lequel la position du trajet optique (4) est modifiée avec un dispositif de miroir réglable (12) et/ou la position du trajet optique (4) est réglée avec une boucle de rétroaction couplée au signal de sortie.

5. Procédé de cytométrie selon une des revendications 1 à 4,
selon lequel la zone d'action (17) recouvre la zone sensible (18) et/ou la position du trajet optique (4) est modifiée transversalement à une direction d'extension du canal de cytomètre (7).

6. Procédé de cytométrie selon une des revendications 1 à 5,
selon lequel la zone d'action (17) est éclairée avec une barrière lumineuse dont la section transversale a une première dimension suivant une direction d'extension du canal de cytomètre (7) et une deuxième dimension transversale à la ou à une direction d'extension du canal de cytomètre (7), la première dimension étant plus petite que la deuxième dimension, en particulier la première dimension étant adaptée à une grandeur de la zone sensible (18) et/ou la deuxième dimension à une grandeur de la zone d'action (17).

7. **Unité de cytomètre** (1) avec un logement pour un porte-échantillon (3), de préférence en forme de disque, pouvant être inséré, dans le logement (2) étant agencée une unité de rotation (22) pouvant être couplée avec un porte-échantillon (3) inséré, à l'aide de laquelle le porte-échantillon (3) inséré dans le logement (2) peut tourner, et dans laquelle un trajet optique (4) est formé dans le logement (2) pour effectuer une mesure cytométrique sur un canal de cytomètre (7) du porte-échantillon (3), **caractérisée**
- **en ce qu'**un moyen de blanchiment (9) du porte-échantillon (3) sous l'action de la lumière est formé au moins dans une zone (10) autour du canal de cytomètre,
- une capacité de réglage d'une zone sensible (18) définie par un dispositif de détection (8) à travers la zone (10) autour du canal de cytomètre (7) étant limitée pour le réglage fin.

8. Unité de cytomètre (1) selon la revendication 7,
dans laquelle le moyen de blanchiment (9) comporte au moins un dispositif de lentille (11) formant un faisceau et/ou un dispositif de miroir réglable.

9. Unité de cytomètre (1) selon la revendication 7 ou 8,
dans laquelle est formé un moyen de modification (16) pour modifier une position du trajet optique (4) sur le porte-échantillon (3) inséré,
- de sorte qu'un réglage fin du trajet optique (4) par rapport au porte-échantillon (3) et en particulier au canal de cytomètre (7) peut être effectué.

10. Unité de cytomètre (1) selon la revendication 9,
dans laquelle le moyen de modification (16) possède un dispositif de miroir réglable (12) eu/ou le moyen de modification (16) est aménagé pour régler une position d'une zone sensible (18) et/ou d'une zone d'action (17) sur le porte-échantillon (3) transversalement à une direction d'extension du canal de cytomètre (7).

11. Unité de cytomètre (1) selon une des revendications 7 à 10,
dans laquelle une boucle de rétroaction qui est couplée à un signal de sortie d'un dispositif de détection (8) effectuant la mesure cytométrique est aménagée pour contrôler le moyen de modification (16).

12. Unité de cytomètre (1) selon une des revendications 7 à 11,
dans laquelle la zone d'action (17) est plus grande que la zone sensible (18).

13. Unité de cytomètre (1) selon une des revendications 7 à 12,
dans laquelle sont formés des moyens pour l'éclairage (21) de la zone d'action (17) avec une barrière lumineuse, laquelle barrière lumineuse a une section transversale avec une première dimension suivant une direction d'extension du canal de cytomètre et une deuxième dimension transversale à la direction d'extension du canal de cytomètre (7), la première dimension étant plus petite que la deuxième dimension, en particulier la première dimension étant adaptée à une grandeur de la zone sensible (18) et/ou la deuxième dimension à une grandeur de la zone d'action (17).
